# EUROPEAN PATENT SPECIFICATION

(11) **EP 2 993 826 B1**
(45) Date of publication and mention of the grant of the patent: **19.12.2018**
(21) Application number: 15184803.3
(22) Date of filing: 29.09.2007
(51) Int. Cl.: H04L 12/24

(54) **METHOD FOR DETERMINING NETWORK PARAMETERS**
VERFAHREN ZUR BESTIMMUNG DER NETZWERKPARAMETER
PROCÉDÉ POUR DÉTERMINER DES PARAMÈTRES DE RÉSEAU

(43) Date of publication of application: 09.03.2016
(62) Divisional of application: 07817027.1
(73) Proprietor: Huawei Technologies Co., Ltd., Longgang District Shenzhen, Guangdong 518129 (CN)
(72) Inventor: Olofsson, Henrik, shenzhen (CN)
(74) Representative: Kreuz, Georg Maria

(56) References cited:
- ERICSSON: "Automatic neighbour cell configuration", 3GPP DRAFT; R3-071494 AUTOMATIC NEIGHBOUR CELL CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162315,
- ERICSSON: "MCI conflict detection and resolution", 3GPP DRAFT; S5-071569 E MCI CONFLICT DETECTION AND RESOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Roma; 20070822, 22 August 2007 (2007-08-22), XP050306211,
- ERICSSON: "UE measurements and reporting of Global Cell Identity", 3GPP DRAFT; R2-072674, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135465,

## Description

### Field of the Invention

The present invention relates to a method for determining network parameters in a cellular communication system according to claim 8. The present invention further relates to a network entity according to claim 1.

### Background of the Invention

Wireless mobile communication systems are usually cellular, i.e., the total coverage area of such systems is divided into smaller areas, cells, wherein each of these cells is associated with a radio base station having one or more antennas for providing communication resources via a radio interface for communication with user entities (UEs) in the radio coverage area of the radio base station.

In such systems, the base station often transmits an identity to enable the UE to identify the cell, so that the UE can report to the system which neighbour cell or cells it has detected.

The cells can be located adjacent to each other to jointly provide coverage in the geographical area that the communication system is intended to cover, and also, as in more complex systems, be arranged in different cell layers, wherein cells in different layers can be at least partially overlapping, and also be of different cell size.

In the 3rd Generation Partnership Program (3GPP) work on defining the cellular communication system presently called the Evolved Universal Terrestrial Radio Access (E-UTRA), or Long Term Evolution (LTE), it is suggested that each cell should be identified with one local identity (LI) (a.k.a. physical layer cell identity (PCI)), which is not unique within the system, i.e., the identity can be reused for more than one cell, and one global cell identity (GCI) which is unique in the system.

The use of both kinds of identities for a cell has the advantage that the LI can be made shorter, and thereby requires a smaller number of bits in a transmission than a global identity, for example when a UE is signalling the identity of a cell that has been detected by the UE. The GCI requires more bits in a transmission, but the use of the LI has the advantage that the GCI can be broadcasted more seldom, and also be used more seldom in reports from the UE.

As was mentioned, the UE is using the LI when reporting detected cells, but the system can also be using the LI when broadcasting which cells that should be barred (black listed and thereby not to be used by the UE) and if some cell specific parameters, for example a signal strength offset, should be applied to the measurements performed by the UE. Consequently, it is important that the LI uniquely identifies only one cell within the area where the UE is looking for neighbours.

There are situations when a base station of a serving cell must be able to translate a LI that a UE detects from a neighbour (or other) cell into a corresponding unique identity (GCI). For example, the base station needs to translate the LI into the corresponding GCI when initiating a communication with the base station of this neighbour cell, e.g., in order to initiate a handover process.

In 3GPP RAN 2 document R2-072674 (Ericsson) it is suggested that the translation is accomplished by letting each cell broadcast both LI and GCI (more seldom), and the base station requesting the UE to decode and report the GCI for a LI reported by the UE. This allows the base station to build up a representation, such as a list, of detected LI and its corresponding GCI for all neighbouring cells.

The usage of LI can be carefully planned so that no ambiguities arise with respect to which GCI a particular LI belongs. There are, however, situations where such planning is not always possible, for example in scenarios where a network operator is no longer in direct control of the location of the base station, e.g., personal home base stations, which are sold to an end-user with the purpose of creating one or more small cells in the home of the end-user.

In general, the same situation will occur if the operator chooses to not apply a strict planning process, but instead would like the system itself to be able to handle and adapt to situations where ambiguities regarding the GCI to which a particular LI belongs arise. In such situations, ambiguities regarding cell identities may arise, i.e., there may be two or more cells in the vicinity of each other having the same LI. Therefore, there exists a need for a way of handling situations when ambiguities in cell identities arise.

In the 3GPP document S5-071569 it is suggested that each base station should request the UE to report the GCI, also if the base station already has a mapping from this LI to a GCI. The reason for this is to detect potential collisions of the above kind, where cells located close to each other are using the same LI (but different GCI). This solution detects any cases where neighbours to one cell use the same LI.

This solution, however, has the drawback that it requires the base station to repeatedly request the UE to report the GCI to make sure that there is no collision. This reporting will consume valuable radio resources for the system, as well as battery power in the UE.

3GPP document R3-071494 shows an example for automatic neighbour cell configuration using locally (MCI) and globally (CIPL) unique cell identifiers.

Consequently, there exists a need for an improved method for detecting and managing cell parameters in general, and cell identities in particular, in a cellular communication system.

### Summary of the Invention

It is an object of the present invention to provide a method for determining cell parameters in a cellular communication system that solves or at least mitigates the above mentioned problems. This object is achieved by a method according to claim 8.

It is a further object of the present invention to provide a network entity that solves the above mentioned problems. This object is achieved by a network entity according to claim 1.

According to the present invention, it is provided a method for determining network parameters in a cellular communication system. Cells in the system includes at least a first network entity being a radio transmitter for providing communication with at least one user entity, when in the coverage area of a said cell, and includes at least one local network parameter, which is reusable for radio transmitters within the communication system, and at least one global network parameter, which is unique to the radio transmitter. The method is characterized in the step of, from at least a first radio transmitter, transmitting a representation of a local network parameter and corresponding global network parameter for at least one surrounding radio transmitter to a second network entity.

This has the advantage that ambiguities in the use of cell parameters, e.g., if two cells in the vicinity of each other are using the same local identity, can be solved by the said network entity collecting representations of local cell identities and corresponding global cell identities from radio transmitters so that the second network entity can then use the collected information to perform a thorough analysis of the situation, and, if required, change the local identity of one or more cells, e.g., if it is determined that two or more cells are being too closely located to have the same local identity. Different types of distances can be used in this evaluation, e.g. geographical distance or time difference of signals transmitted from the cells.

The second network entity can be a central node and the analysis consequently be performed in a centralized manner, so that all radio transmitters (e.g., base stations) within the communication system, or within a certain area, report to one single entity. Alternatively, the analysis can be performed in a distributed manner, where radio transmitters (base stations) exchange information with other radio transmitters (base stations) in order to verify the local identity in the area surrounding the radio transmitter. Further, a radio transmitter, or the central network entity, can request a radio transmitter to, in turn, request its surrounding radio transmitters to transmit the said representation. In this way data can be collected in a recursive manner.

The invention also relates to a communication system.

Further characteristics of the present invention, and advantages thereof, will be evident from the following detailed description of preferred embodiments and appended drawings, which are given by way of example only, and are not to be construed as limiting in any way.

### Brief Description of the Drawings

Fig. 1 discloses an example of a E-UTRA system in which the present invention may advantageously be utilised.
Fig. 2 discloses an exemplary method according to the invention.
Fig. 3 discloses an example of a simple relationship graph.
Fig. 4 discloses an example of an extended relationship graph.
Fig. 5 discloses another example of a relationship graph.
Fig. 6 discloses an exemplary illustration of a recursive way of collecting information.
Fig. 7 discloses an inter-frequency scenario.

### Detailed Description of the Invention

Although applicable in various kinds of cellular communication systems, the present invention will be described with reference to the 3rd Generation Partnership Program (3GPP) cellular communication system, which presently is called the Evolved Universal Terrestrial Radio Access (E-UTRA) or Long Term Evolution (LTE).

In the present description and claims, the term network entity is to be interpreted as a radio access node, such as a radio base station, or a backbone network node. Also smaller home base stations are to be included in the term network entity. Mobile user entities such as mobile phones, smartphones or handheld computers having communication capabilities, are not included in the term network entity as used in this description and the following claims.

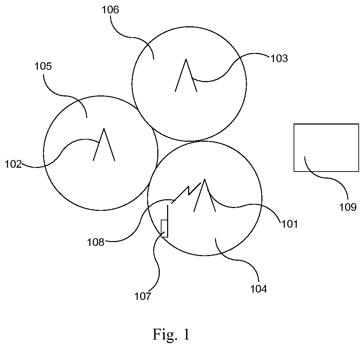

An example of a simplified architecture of an E-UTRA system 100 is shown in fig. 1, and discloses radio base stations 101-103 (stationary radio transceivers for duplex communication or, as the case may be, radio transmitters for downlink only mode communication. In the figure, the base stations are provided with radio transceivers). In E-UTRA the base stations are called eNBs (enhanced Node B) 101-103. A user entity (UE) 107 connects to the system by means of a radio interface, Uu interface, 108. The eNB 101-103 handles communication over the radio interface in a certain coverage area, i.e., cell 104-106, which is the area wherein the radio signal is strong enough to allow a satisfactory communication with UEs within the said area.

When the UE 107 moves around in the coverage area provided by the communication system, the UE 107 will move from one cell to another, and thereby an ongoing communication will be transferred (handed over) from the eNB to which the UE presently belongs, i.e., the source cell, cell 104 in fig. 1, to the cell into which the UE is entering, i.e., the target cell, e.g., cell 105 in fig. 1. This is accomplished by establishing a communication channel on the Uu interface of the target cell, and terminating the communication channel on the Uu interface of the source cell.

However, in order to perform such a handover, and also for other purposes, it must be possible to identify the cells, i.e., distinguish the cells from each other. As was mentioned in the background description above, this can be accomplished by the base stations 104-106 transmitting identities by means of which the base stations can be identified. The transmitted identities can be transmitted explicitly, or as signals from which the identities can be derived. In this description and claims, signals from which the identities can be derived are to be considered as if the identities are explicitly transmitted.

As was also mentioned above, the base stations can be provided with both a global cell identity GCI, which is unique within the system, and a local cell identity, LI, which can be reused for more than one base station within the system. Preferably, the cells are assigned local identities in a manner that ensures that two cells having the same LI are located at a sufficient distance from each other. However, since communication systems are becoming more and more complex, it is becoming more and more difficult to plan the usage of LI in a system in a manner so that no ambiguities arise with respect to which GCI a particular LI belongs. Also, there are situations where such planning is not always possible, for example with regard to personal home base stations as described above, and/or when the operator wants the system itself to be able to handle and adapt to situations where collisions in the use of LI arise, e.g., in SON (Self Organizing Networks) systems.

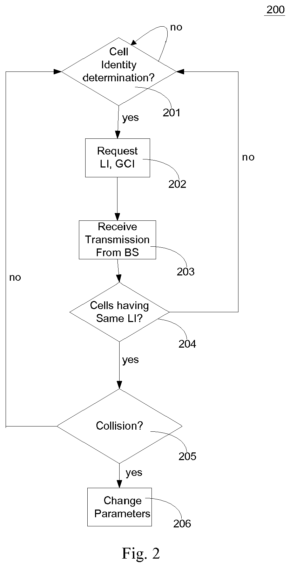

A method 200 according to a first exemplary embodiment of the present invention, which solves or at least mitigates the problem of such ambiguities, is disclosed in fig. 2. In the first exemplary embodiment, a central network entity, shown as 109 in fig. 1, is utilized to perform the necessary calculations to determine if two or more cells are using the same LI, and if one or more of those cells must change LI. The method starts in step 201, and when a cell identity determination is to be performed, the process continues to step 202. The cell identity determination can, for example, be performed with certain intervals, which can be set beforehand in the system. The length of the intervals between determinations can, for example, depend on time of day, weekday etc.

In step 202, the network entity 109 requests base stations in the system to transmit their lists of local identities LI and their corresponding global identities GCI to another network entity, e.g., the said network entity 109. All base stations in the system can be requested to transmit their lists, or, alternatively, only part of the base stations, e.g., base stations of a particular region of the communication system. Further, if a single base station handles more than one cell, lists for all cells that the base station handles can be transmitted.

A base station can, for example, create these lists from measurement data received from user entities when present in the coverage area of by the base station. Each time a new LI is reported to the base station that is not previously present in the list, the LI is added to the list, and the UE, either voluntarily or on request from the base station, transmits the GCI that corresponds to the LI. The base stations transmit their associated local identities and global identities so that the identities can be derived by a user entity from radio signals received from the said base stations, thereby enabling the communication of LI and GCI to a serving BS or other network entity according to the above.

When the network entity has received the requested lists, in step 203, the lists of detected GCI from each cell are combined into a data structure that enables a deeper analysis of the relationships, and a determination is performed in step 204 to determine whether there are any cell identity collisions present. This determination can, for example, be accomplished by the network entity 109 creating a representation of the locations of the various LI in the system, e.g., as a cell map. If it then is determined that two or more cells have the same LI, the process continues to step 205. Otherwise the process returns to step 201. In step 205 it is determined whether there is an actual collision, i.e., if the cells having a same LI are located too close to each other, so that there might be a risk that a UE in a position in between cells having the same LI can receive signals from both cells, which thereby can interfere with the ability of receiving data correctly. This determination can, for example, be based on the distance between the cells having the same LI. If the actual geographical locations of the cells (base stations) are known, the linear distance between the base stations can be compared with a threshold value, and if the distance is below the threshold value, a collision is detected. The threshold valuecan be arranged to take into account known geographical obstacles, such as tall buildings, mountains and the like, and also the transmitter power of the base stations. If a collision is detected, the process continues to step 206, otherwise it returns to step 201. In step 206 the collision is taken care of by changing the LI of one (or possibly more than one if more than two cells having the same LI are involved in the determination) of the cells.

Consequently, the present invention provides a solution that in a simple manner is capable of handling cell identity collisions.

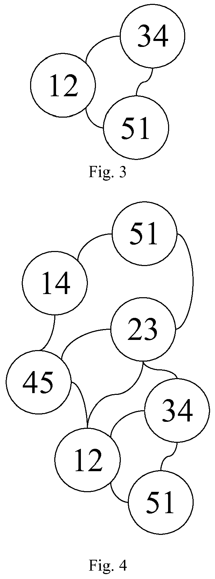

Instead of using the actual distance between two base stations in the determination of LI collisions, the analysis of distances between cells can be done in many ways. One way is to use a relationship graph. This is illustrated in fig. 3, where a relationship between two cells (circles) is illustrated with a line between the cells. As can be seen in the figure, PI=34 and PI=12 is used in the two neighbouring cells of the cell with PI=51.

In fig. 4, the example has been extended to include further cells, where PI=51 is re-used in another part of the network, where the cells having the same PI is not directly neighbouring each other. As can be seen in the figure, there are two or more cells between the two cells using PI=51 (depending on route in the figure).

If graphs of the disclosed kind are used, the distance between two cells having the same PI can be determined in terms of number of intermediate cells. In one example it is determined that if the shortest route includes two or less cells in between, as is exemplified in fig. 4 (51->23->34->51), a collision is determined to exist. Naturally the limit of number of cells in between can be set to any suitable number, and can also be arranged to depend on geography, whether it is an urban or country side area etc.

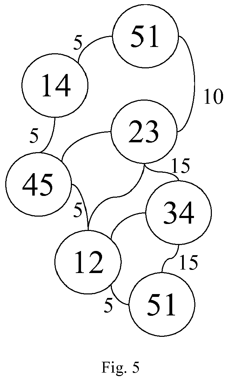

In another example, information about the cell size is used, and a distance is assigned to each relationship between the cells based on this cell size. This is exemplified in fig. 5, which shows the relationship graph of fig. 4, however also including distances between the cells. In the example, the distance between the two cells with PI 51 is 20 for the left hand route, including PI 14, 45, and 12, whereas the distance for the right-hand route, including PI 23 and 34 is 40. This illustrates that even though the left hand route is spanning over more cells, it is still shorter. In a solution according to fig. 5, a certain distance threshold value can be set, indicating that shorter distances is classified as a collision, while longer distances than the threshold value are not, irrespective of number of cells in between two cells having the same PI.

In order to facilitate the usage of a distance threshold value each base station, when being requested to transmit the PI/GCI list, may also provide a value indicating the cell radius or the geographic location of the cell or cells controlled by the base station.

In an alternative embodiment, the base stations can, for example, instead of transmitting the said lists upon request from a network entity, transmit their representations continuously, when a change has occurred, e.g. when a new identity has been added, at predetermined intervals or a combination of two or more of the above and/or on request by the network entity. The network entity can then perform the determination when an appropriate number of changed lists have been received.

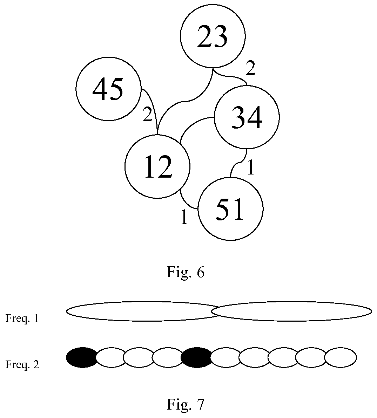

Further, the solutions described so far assumes that a central entity collects the information from all base stations. In another exemplary embodiment, each base station performs the evaluation by collecting the information from the neighbouring base stations. This can be done in a recursive manner wherein each base station request the list of PI/GCI from all cells mentioned in the own list of PI/GCI. The base station may then use the fetched lists to request information from the neighbour of the neighbour. This could continue in a recursive manner until the base station determines that it has enough information. This is illustrated in fig. 6, where the cell with PI 51 first collect information from cells with PI 12 and 34 and in a next step collects information from cell 45 and 23. Naturally, the recursive method can also be used by the central entity to collect information. A further alternative method of collecting the data is to request a base radio station to, in turn, request its surrounding base stations to transmit the said representation of a local network parameter and corresponding global network parameter to the requesting base station, whereafter the receiving base station transmits received representation(s) to the data collecting network entity.

Even further, the problem of cell identity collisions is even more severe in a multi frequency scenario, since the cells in different frequencies may be of different size. Even if the uniqueness of a LI is guaranteed among the immediate neighbours in one frequency, the UE may be handed over between different frequencies, where relatively smaller cells could cause potential ambiguities since a cell in one frequency may in size equal the size of a plurality of cells of the other frequency.

This is illustrated in fig. 7, where the two black cells using the same PI can be considered separated enough within frequency (layer) 2, but will be perceived as an ambiguity for UEs currently on Frequency 1 but measuring on Frequency 2. One solution to this problem is to extend the prior art solution to let the UE also periodically report GCI of cells on other frequencies, but this would dramatically increase the required transmission. According to the invention, however, a network entity can collect data according to the above from base stations in both (or more, if any) frequencies, and take situations such as in fig. 7 into consideration when determining whether or not there are any cell identity collisions, and take appropriate action on the basis of the determination. For example, even if it is not necessary to increase the minimum distance between cells having the same local identity in, e.g., frequency layer 2 of fig. 7, the distance can be increased anyway in order to avoid ambiguities in frequency layer 1. The network entity can be the central network entity as described above, or alternatively a surrounding base station according to the above.

Further, the above described invention can also be used for other cell specific network parameters than local cell identities, which are important to be unique. Examples of such network parameters include RACH signatures and UL reference signals. If the base stations stores a list of neighbouring global identities and the parameters used in the cell, the invention can be applied according to the above.

Although the present invention has been described in connection with an E-UTRAN system, the principles of the invention applies to cellular access systems in general, and are therefore applicable in any cellular system, as long as a local network parameter and a global network parameter is used by the cells.

In a second embodiment, a method for determining network parameters in a cellular communication system is provided, wherein a coverage area of said communication system is made up of a plurality of cells, each of said cells including at least a first network entity being a radio transmitter for providing communication with at least one user entity, when in the coverage area of a said cell, wherein said radio transmitter includes at least one local network parameter, which is reusable for radio transmitters within the communication system, and at least one global network parameter, which is unique to the radio transmitter in said system, wherein the said radio transmitters include a representation of a local network parameter and corresponding global network parameter for at least one surrounding radio transmitter.

In a first development of the method according to the second embodiment, the method comprises, from at least a first radio transmitter:
- transmitting the said representation of a local network parameter and corresponding global network parameter for at least one surrounding radio transmitter to a second network entity.

In a second development of the method according to the first development of the second embodiment, the said radio transmitters include a representation of the local network parameter and global network parameter for a plurality of surrounding radio transmitters.

In a third development of the method according to the first development of the second embodiment, a plurality of radio transmitters transmit a representation of local network parameters and corresponding global network parameters for surrounding radio transmitters, respectively, to the second network entity.

In a fourth development of the method according to the first development of the second embodiment, said second network entity is a radio transmitter providing coverage in a cell surrounding the transmitting radio transmitter.

In a fifth development of the method according to the first development of the second embodiment, said second network entity is central entity, receiving the said representations from most or all radio transmitters in the communication system or part of the communication system.

In a sixth development of the method according to the first development of the second embodiment, the method further includes the step of, from said second network entity:
- requesting the said first radio transmitter to transmit the said representation of a local network parameter and corresponding global network parameter for at least one radio transmitter surrounding the said first radio transmitter.

In a seventh development of the method according to the sixth development of the second embodiment, the method further includes the step of, from said second network entity:
- requesting the said first radio transmitter to request at least one radio transmitter surrounding the said first radio transmitter to transmit the said representation of a local network parameter and corresponding global network parameter for at least one surrounding radio transmitter to the said radio transmitter, whereafter the said first radio transmitter transmits received representation(s) to the said second network entity.

In an eighth development of the method according to the sixth development of the second embodiment, the method further includes the step of, from said second network entity:
- requesting a representation of local network parameter(s) and corresponding global network parameter(s) from a radio transmitter in a received representation of local network parameter(s) and corresponding global network parameter(s).

In a ninth development of the method according to the first development of the second embodiment, the method further includes the step of, in said second network entity:
- determining if two or more radio transmitters are using an identical local network parameter, and
- modifying the said local network parameter for at least one of the radio transmitters having a same local network parameter if a first criterion is fulfilled.

In a tenth development of the method according to the ninth development of the second embodiment, said first criterion is one or more from the group:
- the distance between the radio transmitters (cells) being shorter than a first threshold value,
- the number of intermediate radio transmitters (cells) between the two cells having the same local network parameter being below a second threshold value.

In an eleventh development of the method according to the first development of the second embodiment, the method further comprises the step of: when two different radio transmitters having the same local network parameter have been detected by a user entity:
- communicating the detection of two different radio transmitters having the same local network parameter to the said first radio transmitter or the said second network entity.

In a twelfth development of the method according to the eleventh development of the second embodiment, said user entity communicates the detection of two different radio transmitters having the same local network parameter to the said system when a second criterion is fulfilled.

In a thirteenth development of the method according to the twelfth development of the second embodiment, said second criterion is one or more from the group:
- two detected identical local identities are located within a first distance from each other;
- the two different radio transmitters having identical local identities are detected concurrently;
- a representation of the distance between the said radio transmitters is below a threshold value;
- two or more radio transmitters having the same local network parameter are detected while the user entity is being served by the same radio transmitter;
- the user entity has at most been present in a predetermined number of cells between the detections of cells having the same local network parameter;
- when the time between the two (or more) detections is lower than a certain value; and/or
- when the user entity has moved less than a predetermined distance.

In a fourteenth development of the method according to the first development of the second embodiment, said global network parameter is a global identity, which is unique to the radio transmitter, and that the said local network parameter is any from the group: local identity, which is reusable for radio transmitters within the communication system; random access channel (RACH) signature or UL reference signal.

In a fifteenth development of the method according to the third development of the second embodiment, a first subset of the said radio transmitters transmit in a first frequency range, and that a second subset of the said radio transmitters transmit in a second frequency range, said second frequency range being different from said first frequency range.

In a sixteenth development of the method according to any of the first to fourth development of the second embodiment, said at least part of said surrounding radio transmitters are neighbour radio transmitters.

In a seventeenth development of the method according to the first development of the second embodiment, at least one of said radio transmitters is a radio transceiver.

In an eighteenth development of the method according to the first development of the second embodiment, said radio transmitters are radio base stations.

In a nineteenth development of the method according to the eighteenth development of the second embodiment, said radio transmitter is an eNB (enhanced Node B) in a Evolved UTRA (E-UTRA) system.

In a third embodiment, a network entity for determining network parameters in a cellular communication system is provided, wherein a coverage area of said communication system is made up of a plurality of cells, each of said cells including at least a first network entity being a radio transmitter for providing communication with at least one user entity, when in the coverage area of a said cell, wherein said radio transmitter includes at least one local network parameter, which is reusable for radio transmitters within the communication system, and at least one global network parameter, which is unique to the radio transmitter in the system, wherein the said radio transmitters include a representation of a local network parameter and corresponding global network parameter for at least one radio transmitter surrounding the said radio transmitters.

In a first development of the network node according to the third embodiment, said network entity includes means for receiving the said representation of local identities and global identities for adjacent radio transmitters from at least a first radio transmitter.

In a second development of the network node according to the first development of the third embodiment, the network entity further includes means for requesting the said first radio transmitter to transmit the said representation to the said network entity.

In a third development of the network node according to the second development of the third embodiment, the network entity further includes means for requesting the said first radio transmitter to request its surrounding radio transmitters to transmit the said representation of a local network parameter and corresponding global network parameter for at least one surrounding radio transmitter to the said first radio transmitter and/or the said network entity.

In a fourth development of the network node according to the second development of the third embodiment, the network entity further includes means for:
- requesting a representation of local network parameter(s) and corresponding global network parameter(s) from a radio transmitter in a received representation of local network parameter(s) and corresponding global network parameter(s).

In a fifth development of the network node according to the first development of the third embodiment, the network entity further includes means for:
- determining if two or more radio transmitters are using an identical local network parameter, and
- modifying the said local network parameter value for at least one of the radio transmitters having a same local network parameter if a first criterion is fulfilled.

In a sixth development of the network node according to the fifth development of the third embodiment, said first criterion is one or more from the group:
- the distance between the radio transmitters (cells) being shorter than a first threshold value,
- the number of intermediate radio transmitters (cells) between the two cells having the same local network parameter being below a second threshold value.

In a fourth embodiment, a communication system for determining network parameters is provided, wherein a coverage area of said communication system is made up of a plurality of cells, each of said cells including at least a first network entity being a radio transmitter for providing communication with at least one user entity, when in the coverage area of a said cell, wherein said radio transmitter includes at least one local network parameter, which is reusable for radio transmitters within the communication system, and at least one global network parameter, which is unique to the radio transmitter in the system, wherein the said radio transmitters include a representation of a local network parameter and corresponding global network parameter for at least one surrounding radio transmitter.

In a first development of the communication system according to the fourth embodiment, the system comprises means for, from at least a first radio transmitter:
- transmitting the said representation of a local network parameter and corresponding global network parameter for at least one surrounding radio transmitter to a second network entity.

In a second development of the communication system according to the first development of the fourth embodiment, said radio transmitters are arranged to include a representation of the local network parameter and global network parameter for a plurality of surrounding radio transmitters.

In a third development of the communication system according to the first development of the fourth embodiment, a plurality of radio transmitters are arranged transmit a representation of local network parameters and corresponding global network parameters for surrounding radio transmitters, respectively, to the second network entity.

In a fourth development of the communication system according to the first development of the fourth embodiment, said second network entity is a radio transmitter providing coverage in a cell surrounding the transmitting radio transmitter.

In a fifth development of the communication system according to the first development of the fourth embodiment, said second network entity is central entity, receiving the said representations from most or all radio transmitters in the communication system or part of the communication system.

In a sixth development of the communication system according to the first development of the fourth embodiment, the communication system further includes means for, from said second network entity:
- requesting the said first radio transmitter to transmit the said representation of a local network parameter and corresponding global network parameter for at least one radio transmitter surrounding the said first radio transmitter.

In a seventh development of the communication system according to the sixth development of the fourth embodiment, the communication system further includes means for, from said second network entity:
- requesting the said first radio transmitter to request radio transmitter surrounding the said first radio transmitter to transmit the said representation of a local network parameter and corresponding global network parameter for at least one surrounding radio transmitter to the said radio transmitter, where the said first radio transmitter it arranged to transmit received representation(s) to the said second network entity.

In an eighth development of the communication system according to the sixth development of the fourth embodiment, the communication system further includes means for, from said second network entity:
- requesting a representation of local network parameter(s) and corresponding global network parameter(s) from a radio transmitter in a received representation of local network parameter(s) and corresponding global network parameter(s).

In a ninth development of the communication system according to the first development of the fourth embodiment, the communication system further includes means for, in said second network entity:
- determining if two or more radio transmitters are using an identical local network parameter, and
- modifying the said local network parameter for at least one of the radio transmitters having a same local network parameter if a first criterion is fulfilled.

In a tenth development of the communication system according to the first development of the fourth embodiment, said global network parameter is a global identity, which is unique to the radio transmitter, and that the said local network parameter is any from the group: local identity, which is reusable for radio transmitters within the communication system; random access channel (RACH) signature or UL reference signal.

In a eleventh development of the communication system according to the third development of the fourth embodiment, the communication system a first subset of the said radio transmitters are arranged to transmit in a first frequency range, and that a second subset of the said radio transmitters are arranged to transmit in a second frequency range, said second frequency range being different from said first frequency range.

## Claims

1. Network entity (109) for handling network parameters comprising:
means for receiving (203), from at least one first radio transmitter (101, 102, 103), a representation of local network parameter and corresponding global network parameter for at least one radio transmitter surrounding the first radio transmitter;
wherein the local network parameter is reusable for radio transmitters within a cellular communication system, and the global network parameter is unique to a radio transmitter in the cellular communication system;
and wherein the network entity (109) is a radio transmitter providing coverage in a cell surrounding the first radio transmitter; and
wherein the radio transmitters are base stations.

2. Network entity (109) according to claim 1, further comprises:
means for requesting the first radio transmitter to transmit the representation.

3. Network entity (109) according to claim 2, further comprises:
means for requesting the first radio transmitter to request its surrounding radio transmitters to transmit the representation of a local network parameter and corresponding global network parameter for at least one surrounding radio transmitter to the first radio transmitter and/or the network entity (109).

4. Network entity (109) according to claim 2, further comprises:
means for requesting the at least one radio transmitter surrounding the first radio transmitter to transmit a representation of a local network parameter and the corresponding global network parameter.

5. Network entity (109) according to claim 2, further comprises:
means for requesting a representation of local network parameter(s) and corresponding global network parameter(s) from a radio transmitter in a received representation of local network parameter(s) and corresponding global network parameter(s).

6. Network entity (109) according to claim 1, further comprises means for:
- determining (204) if two or more radio transmitters are using an identical local network parameter, and
- modifying (206) the local network parameter value for at least one of the radio transmitters having a same local network parameter if a first criterion is fulfilled.

7. Network entity (109) according to claim 6, the first criterion is one or more of:
- a distance between the radio transmitters being shorter than a first threshold value,
- a number of intermediate radio transmitters between two cells having the same local network parameter being below a second threshold value.

8. A method for handling network parameters in a cellular communication system comprising:
receiving (203) by a network entity (109), from at least one first radio transmitter (101, 102, 103), a representation of local network parameter and corresponding global network parameter for at least one radio transmitter surrounding the first radio transmitter;
wherein the local network parameter is reusable for radio transmitters within the cellular communication system, and the global network parameter is unique to a radio transmitter in the cellular communication system;
and wherein the network entity (109) is a radio transmitter providing coverage in a cell surrounding the first radio transmitter; and
wherein the radio transmitters are base stations.

9. Method according to claim 8, further comprises:
requesting the first radio transmitter to transmit the representation.

10. Method according to claim 9, further comprises:
requesting the first radio transmitter to request its surrounding radio transmitters to transmit the representation of a local network parameter and corresponding global network parameter for at least one surrounding radio transmitter to the first radio transmitter and/or the network entity (109).

11. Method according to claim 9, further comprises:
requesting the at least one radio transmitter surrounding the first radio transmitter to transmit a representation of a local network parameter and the corresponding global network parameter.

12. Method according to claim 9, further comprises:
requesting a representation of local network parameter(s) and corresponding global network parameter(s) from a radio transmitter in a received representation of local network parameter(s) and corresponding global network parameter(s).

13. Method according to claim 8, further comprises:
- determining (204) if two or more radio transmitters are using an identical local network parameter, and
- modifying (206) the local network parameter value for at least one of the radio transmitters having a same local network parameter if a first criterion is fulfilled.

14. Method according to claim 13, the first criterion is one or more of:
- a distance between the radio transmitters being shorter than a first threshold value,
- a number of intermediate radio transmitters between two cells having the same local network parameter being below a second threshold value.

## Patentansprüche

1. Netzentität (109) zum Behandeln von Netzparametern, welche umfasst:
Mittel zum Empfangen (203), von wenigstens einem ersten Funksender (101, 102, 103), einer Darstellung eines lokalen Netzparameters und eines entsprechenden globalen Netzparameters für wenigstens einen Funksender in der Umgebung des ersten Funksenders;
wobei der lokale Netzparameter für Funksender innerhalb eines zellularen Kommunikationssystems wiederverwendbar ist und der globale Netzparameter für einen Funksender in dem zellularen Kommunikationssystem eindeutig ist;
und wobei die Netzentität (109) ein Funksender ist, welcher Abdeckung in einer Zelle bereitstellt, die den ersten Funksender umgibt; und
wobei die Funksender Basisstationen sind.

2. Netzentität (109) nach Anspruch 1, welche ferner umfasst:
Mittel zum Übermitteln einer Anforderung an den ersten Funksender, die Darstellung zu senden.

3. Netzentität (109) nach Anspruch 2, welche ferner umfasst: Mittel zum Übermitteln einer Anforderung an den ersten Funksender, an die Funksender seiner Umgebung eine Anforderung zu übermitteln, die Darstellung eines lokalen Netzparameters und eines entsprechenden globalen Netzparameters für wenigstens einen Funksender der Umgebung an den ersten Funksender und/oder die Netzentität (109) zu senden.

4. Netzentität (109) nach Anspruch 2, welche ferner umfasst:
Mittel zum Übermitteln einer Anforderung an den wenigstens einen Funksender der Umgebung des ersten Funksenders, eine Darstellung eines lokalen Netzparameters und des entsprechenden globalen Netzparameters zu senden.

5. Netzentität (109) nach Anspruch 2, welche ferner umfasst:
Mittel zum Anfordern einer Darstellung eines lokalen Netzparameters (lokaler Netzparameter) und entsprechenden globalen Netzparameters (entsprechender globaler Netzparameter) von einem Funksender in einer empfangenen Darstellung eines lokalen Netzparameters (lokaler Netzparameter) und entsprechenden globalen Netzparameters (entsprechender globaler Netzparameter).

6. Netzentität (109) nach Anspruch 1, welche ferner Mittel umfasst zum:
- Bestimmen (204), ob zwei oder mehr Funksender einen identischen lokalen Netzparameter verwenden, und
- Modifizieren (206) des Wertes des lokalen Netzparameters für wenigstens einen der Funksender, die einen gleichen lokalen Netzparameter aufweisen, falls ein erstes Kriterium erfüllt ist.

7. Netzentität (109) nach Anspruch 6, wobei das erste Kriterium eines oder mehreres von Folgendem ist:
- ein Abstand zwischen den Funksendern ist kürzer als ein erster Schwellenwert,
- eine Anzahl von Zwischen-Funksendern zwischen zwei Zellen, die denselben lokalen Netzparameter aufweisen, ist kleiner als ein zweiter Schwellenwert.

8. Verfahren zum Behandeln von Netzparametern in einem zellularen Kommunikationssystem, welches umfasst:
Empfangen (203), durch eine Netzentität (109), von wenigstens einem ersten Funksender (101, 102, 103), einer Darstellung eines lokalen Netzparameters und eines entsprechenden globalen Netzparameters für wenigstens einen Funksender in der Umgebung des ersten Funksenders;
wobei der lokale Netzparameter für Funksender innerhalb des zellularen Kommunikationssystems wiederverwendbar ist und der globale Netzparameter für einen Funksender in dem zellularen Kommunikationssystem eindeutig ist;
und wobei die Netzentität (109) ein Funksender ist, welcher Abdeckung in einer Zelle bereitstellt, die den ersten Funksender umgibt; und wobei die Funksender Basisstationen sind.

9. Verfahren nach Anspruch 8, welches ferner umfasst:
Übermitteln einer Anforderung an den ersten Funksender, die Darstellung zu senden.

10. Verfahren nach Anspruch 9, welches ferner umfasst:
Übermitteln einer Anforderung an den ersten Funksender, an die Funksender seiner Umgebung eine Anforderung zu übermitteln, die Darstellung eines lokalen Netzparameters und eines entsprechenden globalen Netzparameters für wenigstens einen Funksender der Umgebung an den ersten Funksender und/oder die Netzentität (109) zu senden.

11. Verfahren nach Anspruch 9, welches ferner umfasst:
Übermitteln einer Anforderung an den wenigstens einen Funksender der Umgebung des ersten Funksenders, eine Darstellung eines lokalen Netzparameters und des entsprechenden globalen Netzparameters zu senden.

12. Verfahren nach Anspruch 9, welches ferner umfasst:
Anfordern einer Darstellung eines lokalen Netzparameters (lokaler Netzparameter) und entsprechenden globalen Netzparameters (entsprechender globaler Netzparameter) von einem Funksender in einer empfangenen Darstellung eines lokalen Netzparameters (lokaler Netzparameter) und entsprechenden globalen Netzparameters (entsprechender globaler Netzparameter).

13. Verfahren nach Anspruch 8, welches ferner umfasst:
- Bestimmen (204), ob zwei oder mehr Funksender einen identischen lokalen Netzparameter verwenden, und
- Modifizieren (206) des Wertes des lokalen Netzparameters für wenigstens einen der Funksender, die einen gleichen lokalen Netzparameter aufweisen, falls ein erstes Kriterium erfüllt ist.

14. Verfahren nach Anspruch 13, wobei das erste Kriterium eines oder mehreres von Folgendem ist:
- ein Abstand zwischen den Funksendern ist kürzer als ein erster Schwellenwert,
- eine Anzahl von Zwischen-Funksendern zwischen zwei Zellen, die denselben lokalen Netzparameter aufweisen, ist kleiner als ein zweiter Schwellenwert.

## Revendications

1. Entité de réseau (109) pour traiter des paramètres de réseau, comprenant :
des moyens pour recevoir (203), en provenance d'au moins un premier émetteur radio (101, 102, 103), une représentation d'un paramètre de réseau local et d'un paramètre de réseau mondial correspondant pour au moins un émetteur radio entourant le premier émetteur radio ;
le paramètre de réseau local étant réutilisable pour des émetteurs radio dans un système de communication cellulaire et le paramètre de réseau mondial étant unique pour un émetteur radio dans le système de communication cellulaire ;
et l'entité de réseau (109) étant un émetteur radio assurant une couverture dans une cellule entourant le premier émetteur radio ; et
les émetteurs radio étant des stations de base.

2. Entité de réseau (109) selon la revendication 1, qui comprend en outre :
des moyens pour demander au premier émetteur radio de transmettre la représentation.

3. Entité de réseau (109) selon la revendication 2, qui comprend en outre :
des moyens pour demander au premier émetteur radio de demander à ses émetteurs radio environnants de transmettre la représentation d'un paramètre de réseau local et d'un paramètre de réseau mondial correspondant pour au moins un émetteur radio environnant au premier émetteur radio et/ou à l'entité de réseau (109).

4. Entité de réseau (109) selon la revendication 2, qui comprend en outre :
des moyens pour demander au ou aux émetteurs radio entourant le premier émetteur radio de transmettre une représentation d'un paramètre de réseau local et du paramètre de réseau mondial correspondant.

5. Entité de réseau (109) selon la revendication 2, qui comprend en outre :
des moyens pour demander une représentation d'un ou de plusieurs paramètres de réseau local et d'un ou de plusieurs paramètres de réseau mondial correspondants à partir d'un émetteur radio dans une représentation reçue d'un ou de plusieurs paramètres de réseau local et d'un ou de plusieurs paramètres de réseau mondial correspondants.

6. Entité de réseau (102) selon la revendication 1, qui comprend en outre des moyens :
- pour déterminer (204) si au moins deux émetteurs radio utilisent un paramètre de réseau local identique, et
- pour modifier (206) la valeur de paramètre de réseau local pour au moins l'un des émetteurs radio ayant un même paramètre de réseau local si un premier critère est rempli.

7. Entité de réseau (109) selon la revendication 6, le premier critère est :
- une distance entre les émetteurs radio qui est plus courte qu'une première valeur de seuil et/ou
- un nombre d'émetteurs radio intermédiaires entre deux cellules ayant le même paramètre de réseau local qui est inférieur à une seconde valeur de seuil.

8. Procédé pour traiter des paramètres de réseau dans un système de communication cellulaire, consistant :
à recevoir (203), au moyen d'une entité de réseau (109), en provenance d'au moins un premier émetteur radio (101, 102, 103), une représentation d'un paramètre de réseau local et d'un paramètre de réseau mondial correspondant pour au moins un émetteur radio entourant le premier émetteur radio ;
le paramètre de réseau local étant réutilisable pour des émetteurs radio dans le système de communication cellulaire et le paramètre de réseau mondial étant unique pour un émetteur radio dans le système de communication cellulaire ;
et l'entité de réseau (109) étant un émetteur radio assurant une couverture dans une cellule entourant le premier émetteur radio ; et
les émetteurs radio étant des stations de base.

9. Procédé selon la revendication 8, qui consiste en outre :
à demander au premier émetteur radio de transmettre la représentation.

10. Procédé selon la revendication 9, qui consiste en outre :
à demander au premier émetteur radio de demander à ses émetteurs radio environnants de transmettre la représentation d'un paramètre de réseau local et d'un paramètre de réseau mondial correspondant pour au moins un émetteur radio environnant au premier émetteur radio et/ou à l'entité de réseau (109).

11. Procédé selon la revendication 9, qui consiste en outre :
à demander au ou aux émetteurs radio entourant le premier émetteur radio de transmettre une représentation d'un paramètre de réseau local et du paramètre de réseau mondial correspondant.

12. Procédé selon la revendication 9, qui consiste en outre :
à demander une représentation d'un ou de plusieurs paramètres de réseau local et d'un ou de plusieurs paramètres de réseau mondial correspondants à partir d'un émetteur radio dans une représentation reçue d'un ou de plusieurs paramètres de réseau local et d'un ou de plusieurs paramètres de réseau mondial correspondants.

13. Procédé selon la revendication 8, qui consiste en outre :
- à déterminer (204) si au moins deux émetteurs radio utilisent un paramètre de réseau local identique, et
- à modifier (206) la valeur de paramètre de réseau local pour au moins l'un des émetteurs radio ayant un même paramètre de réseau local si un premier critère est rempli.

14. Procédé selon la revendication 13, le premier critère est :
- une distance entre les émetteurs radio qui est plus courte qu'une première valeur de seuil et/ou
- un nombre d'émetteurs radio intermédiaires entre deux cellules ayant le même paramètre de réseau local qui est inférieur à une seconde valeur de seuil.
